# EUROPEAN PATENT APPLICATION

(11) **EP 2 896 498 A1**
(43) Date of publication of application: **22.07.2015**
(21) Application number: 15150289.5
(22) Date of filing: 07.01.2015
(51) Int. Cl.: B32B 7/12, B32B 3/06, B32B 3/12, B32B 3/20, F16B 5/00, B64C 3/20

(54) **Sandwich-structural composite apparatus with core joining and splicing method for retention of structural and acoustic capability**

(30) Priority: 21.01.2014 US 201414160072
(71) Applicant: The Boeing Company, Chicago, IL 60606-2016 (US)
(72) Inventor: Harrison, Geoffrey E., Chicago, IL Illinois 60606 (US); Sawicki, Adam J., Chicago, IL Illinois 60606 (US); Syberg, Torben, Chicago, IL Illinois 60606 (US)
(74) Representative: Morrall, Jonathan Ian McLachlan

(57) **Abstract**

A sandwich-structural composite is assembled from a front sheet and a back sheet that sandwich between them first and second open cell core panels that are spliced together along intermeshing edges of the panels with projections from the panels engaging into slots into the panels. There is no adhesive substance employed between the intermeshing edges of the two core panels. The joining and splicing of the intermeshing core panel edges retains the structural and acoustic capability of the composite without the need for adhesives (film, foaming, paste, potting compound, etc.) between the intermeshing edges of the core panels.

## Description

### FIELD

This disclosure pertains to a sandwich-structural composite and its method of construction. The composite is comprised of a front sheet and a back sheet that sandwich between them first and second core panels.

### BACKGROUND

Sandwich-structural composites are typically constructed of thin, stiff sheets that are attached to opposite sides of an open cell core panel. A layer of adhesive typically adheres the two sheets to the opposite sides of the core panel.

The open cell core panels that are used in the assembly of sandwich-structural composites are fabricated in sizes, shapes and types that must be joined end to end or edge to edge when assembling large sandwich-structural composites. The opposing panel edges are typically spliced or seamed together by an adhesive, for example a foaming adhesive that is applied between the opposing edges, fills the open cells along the edges and secures the edges together. This joining, slicing or seaming process employing the structural adhesive injected between the edges of two panels impacts the structural capability, acoustic performance, cost and manufacturability of the sandwich-structural composite.

In the current method of constructing a sandwich-structural composite the two or more open cell core panels that are being spliced, seamed and/or joined at their opposing edges can move relative to each other during the assembly process to positions away from their desired relative positions for the structural composite. Additionally, the adhesive application between the abutting edges of two adjacent open cell core panels could be lacking in steadiness or regularity along the abutting edges, leaving adhesive voids that compromise the integrity of the joint between the abutting edges. The positioning of the abutting panel edges and the application of the adhesive between the abutting edges requires accurate handling and positioning of the open cell panels and accurate application of the adhesive that increase the time and cost of manufacturing the structural composite. The cost of the adhesive also adds to the overall cost of the sandwich-structural composite. The adhesive applied between the open cell core panel abutting edges could also migrate away from the abutting edges during the curing process of the adhesive, thereby compromising the strength of the adhesive bond. In constructing a sandwich-structural composite having a capacity for acoustic attenuation, the blockage of open cells along the abutting edges of the open cell core panels detracts from the acoustic attenuation capability of the blocked cells. After completion of the sandwich-structural composite it is difficult to inspect the completed composite for defects that may have occurred during the application of the adhesive between the abutting edges of the core panels or defects that occurred during the curing process of the adhesive.

### SUMMARY

The sandwich-structural composite and its method of assembly of this disclosure are unique in that the need for an adhesive to join together abutting edges of two or more adjacent open cell core panels in the construction of the composite is eliminated. The lack of adhesive in the sandwich-structural composite provides an acoustically smooth core panel splicing construction and method. The elimination of the adhesive (film, foaming, paste, potting compound, etc.) from the sandwich-structural composite construction removes the primary cause of acoustic performance degradation in composites which is the blockage of the core panel acoustic features (the open cells) by the adhesive. The cost of constructing the sandwich-structural composite is reduced and the efficiency of manufacturability is increased due to the elimination of the adhesive and the time needed to apply the adhesive in the construction of the composite.

The sandwich-structural composite of the disclosure is basically comprised of a first open cell core panel, a second open cell core panel, a front sheet (planar or non-planar) and a back sheet (planar or non-planar). These basic component parts are constructed of materials typically employed in the constructions of sandwich-structural composites that best suit the sandwich-structural composite for its intended purpose. These materials could include paper or card stock, aluminum, fiberglass or any other types of materials employed in constructing sandwich-structural composites.

The first open cell core panel is constructed with at least one edge of the panel having at least one projection from the panel and at least one slot into the panel. The projection and the slot have basically the same configurations. This enables the projection of one core panel to extend into the slot of an adjacent core panel. In other embodiments the first open cell core panel could be constructed with an edge having a plurality of projections from the core panel and a plurality of slots into the core panel.

The second open cell core panel is also constructed with at least one edge of the panel having at least one projection from the panel and at least one slot into the panel. Again, the projection and the slot of the second core panel have basically the same configurations. Also, the projection and the slot of the second core panel have basically the same configurations as the projection and the slot of the first core panel. In other embodiments the second open cell core panel could be constructed with an edge having a plurality of projections from the core panel and a plurality of slots into the core panel.

The back sheet has opposite exterior and interior surfaces. In constructing the sandwich-structural composite the back sheet is laid down on its exterior surface and the first and second open cell core panels are positioned on the back sheet interior surface. A film or layer of adhesive can be applied to the back sheet interior surface prior to positioning the first and second core panels on the interior surface. The adhesive is used to secure the back sheet to the first and second core panels.

The first and second open cell core panels are positioned side by side on the interior surface of the back sheet with the projection from the first core panel extending into the slot into the second core panel and the projection from the second core panel extending into the slot into the first core panel. The engagement or intermeshing of the projections in the slots couples the first and second open cell core panels together along their intermeshing edges without the use of adhesives between the intermeshing edges of the two core panels.

The front sheet also has opposite exterior and interior surfaces. In constructing the sandwich-structural composite the front sheet is laid down on the coupled, intermeshing first and second core panels with the front sheet interior surface laying down on the core panels. A layer or film of adhesive can be applied to the front sheet interior surface prior to the interior surface being laid down on the coupled, intermeshing core panels.

The adhesive applied to the interior surfaces of the back sheet and the front sheet secures the sheets to the opposite sides of the coupled, intermeshing core panels and completes the construction of the sandwich-structural composite. The front and back sheets are of sufficient strength to bridge the composite shear loads across the coupled, intermeshing core panels. The composite is constructed without the use of adhesives between the coupled, intermeshing core panel edges and the acoustic capacity across the composite is maintained.

The sandwich-structural composite construction uses little or no structural adhesive, either film or foaming. The elimination of the adhesive between the intermeshing edges of the two core panels removes the primary cause of acoustic performance degradation in the sandwich-structural composite construction which is the blockage of the open cells between the intermeshing panels by the adhesive. The cost of the adhesive between the intermeshing panels and the cost of the adhesive application is eliminated, thereby reducing the manufacturing costs of the sandwich-structural composite. The removal of the adhesive from the sandwich-structural composite construction, the core panel to core panel intermeshing and stabilization, and the front and back sheet interlocking of the coupled core panels improves manufacturability and reduces defects and rework to correct defects in the composite.

The features, functions, and advantages that have been discussed can be achieved independently in various embodiments or may be combined in yet other embodiments further details of which can be seen with reference to the following description and drawings.

Further, the disclosure comprises embodiments according to the following:
An aircraft comprising: a sandwich-structural composite panel having, a first open cell core panel with length and width dimensions and a thickness, numerous open cells passing through the first core panel thickness and the first core panel having an edge, the first core panel edge having a projection from the first core panel with several of the open cells passing through the first core panel projection; a second open cell core panel with length and width dimensions and a thickness, numerous open cells passing through the second core panel thickness and the second core panel having an edge, the second core panel edge having a slot into the second core panel; the first core panel edge and the second core panel edge intermeshing with the projection from the first core panel extending into the slot into the second core panel; a front sheet having opposite exterior and interior surfaces, the front sheet interior surface overlaying the first and second core panels; and, a back sheet having opposite exterior and interior surfaces, the back sheet interior surface overlaying the first and second core panels on an opposite side of the first and second core panels from the front sheet.

Optionally, the sandwich-structural composite further comprising: the first core panel edge having a slot into the first core panel; the second core panel edge having a projection from the second core panel with several of the open cells passing through the second core panel passing through the second core panel projection; and, the first core panel edge and the second core panel edge intermeshing with the projection from the first core panel extending into the slot into the second core panel and the projection from the second core panel extending into the slot into the first core panel.

Optionally, the sandwich-structural composite further comprising: the projection from the first core panel being one of a plurality of projections from the first core panel and the slot into the first core panel being one of a plurality of slots into the first core panel; and, the projection from the second core panel being one of a plurality of projections from the second core panel and the slot into the second core panel being one of a plurality of slots into the second core panel; and, the first core panel edge and the second core panel edge intermeshing with the plurality of projections from the first core panel extending into the plurality of slots of the second core panel and the plurality of projections from the second core panel extending into the plurality of slots of the first core panel.

Optionally, the sandwich-structural composite further comprising: the projection from the first core panel having a rectangular configuration and the slot into the first core panel having a rectangular configuration; the projection from the second core panel having a rectangular configuration and the slot into the second core panel having a rectangular configuration; and, the intermeshing edges of the first core panel and the second core panel having a finger joint configuration.

Optionally, the sandwich-structural composite further comprising: the projection from the first core panel having a wave configuration and the slot into the first core panel having a trough configuration; the projection from the second core panel having a wave configuration and the slot into the second core panel having a trough configuration; and, the intermeshing edges of the first core panel and the second core panel having a sinusoidal joint configuration.

Optionally, the sandwich-structural composite further comprising: the projection from the first core panel having a dovetail configuration and the slot into the first core panel having a dovetail configuration; the projection from the second core panel having a dovetail configuration and the slot into the second core panel having a dovetail configuration; and, the intermeshing edges of the first core panel and the second core panel having a dovetail joint configuration.

### BRIEF DESCRIPTION OF THE DRAWINGS

Figure 1 is a representation of an exploded view of the sandwich-structural composite of the disclosure and its method of assembly.
Figure 2 is a representation of a plan view of the sandwich-structural composite with a portion of the composite removed.
Figure 3 is a representation of a plan view of a further embodiment of the sandwich-structural composite similar to Figure 2.
Figure 4 is a representation of a plan view of a further embodiment of the sandwich-structural composite similar to Figure 2.
Figure 5 is a representation of a plan view of a further embodiment of the sandwich-structural composite similar to Figure 2.
Figure 6 is a flow diagram of the method described herein.
Figure 7 is a flow diagram of aircraft production and service methodology.
Figure 8 is a block diagram of an aircraft.

### DETAILED DESCRIPTION

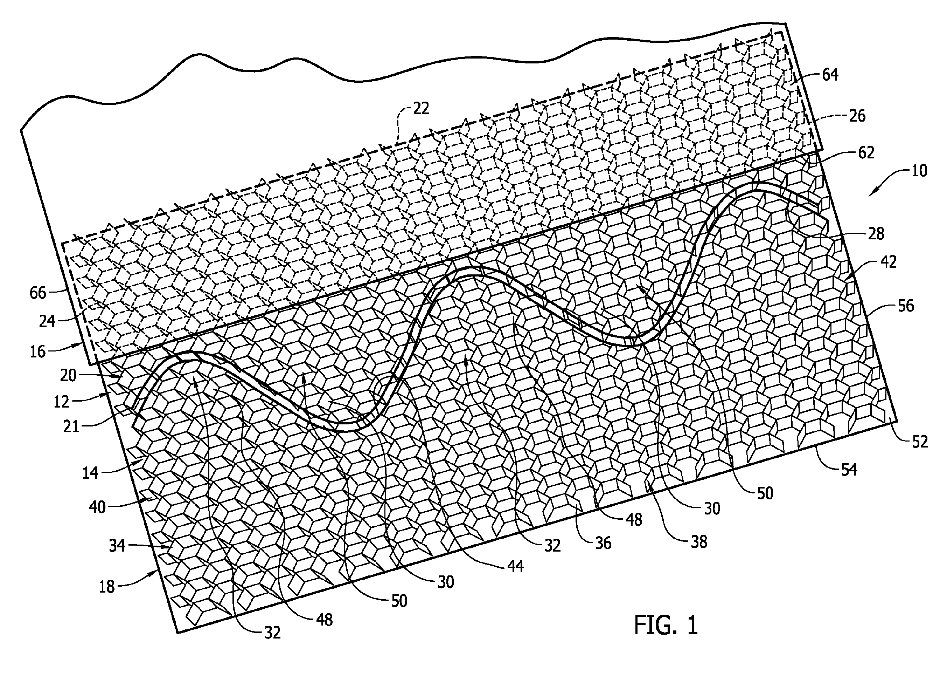

Figure 1 is a representation of a first embodiment of the sandwich-structural composite 10 of the disclosure. The composite 10 is basically comprised of a first open cell core panel 12, a second open cell core panel 14, a front sheet 16 (planar or non-planar) and a back sheet 18 (planar or non-planar). These basic component parts of the composite are constructed of materials that are typically employed in the constructions of sandwich-structural composites that best suit the composite for its intended purpose. These materials could include paper or card stock, aluminum, fiberglass or other types of materials employed in constructing sandwich-structural composites as well as equivalents of such materials.

The first open cell core panel 12 has mutually perpendicular length and width dimensions and a thickness. The core panel 12 has numerous open cells 20 passing through the panel thickness. The open cells 20 are represented schematically in Figure 1 as having honeycomb configurations, but the cells 20 could have any one of a variety of known cross-section configurations such as rectangular, triangular, or an equivalent thereof. Each of the open cells 20 is surrounded by cell walls 21 that give the open cell its cross-section configuration. Each of the open cells 20 can have a hollow or completely empty interior volume, or could contain a septum material.

In the embodiment of the first core panel 12 shown in Figure 1, the panel has a substantially straight edge 22 along its length dimension, and parallel and opposite substantially straight edges 24, 26 along its width dimension at opposite sides of the panel length. The panel edge 28 that extends along the panel length dimension and is opposite the substantially straight panel edge 22 has a generally sinusoidal configuration.

The sinusoidal edge 28 is formed by a plurality of alternating wave projections 30 from the first core panel 12 and a plurality of trough slots 32 into the first core panel 12. As represented in Figure 1, each of the projections 30 from the first core panel 12 is dimensioned where numerous open cells 20 of the first core panel 12 are in each of the projections 30. In variant embodiments of the first core panel 12 the sinusoidal panel edge 28 could be dimensioned so that fewer of the panel open cells 20 are positioned in each projection 30, or more of the panel open cells 20 are positioned in each projection 30.

The second open cell core panel 14 is constructed as substantially a mirror image of the first open cell core panel 12. The second core panel 14 is also comprised of numerous open cells 34 passing through the panel. The open cells 34 are represented in Figure 1 as having honeycomb configurations, but the cells 34 could have any known configuration or an equivalent thereof. Furthermore, the second core panel open cells 34 need not have the same configurations as the open cells 20 of the first core panel 12. As with the open cells of the first core panel 12, the cross-section configurations of the open cells 34 of the second core panel are defined by the cell walls 36 that surround the cells. The second core panel cells 34 could have hollow or completely empty interior volumes, or could contain a septum material.

In the embodiment of the composite 10 represented in Figure 1, the second core panel 14 has mutually perpendicular length and width dimensions that are substantially the same as those of the first core panel 12, and a thickness dimension that is substantially the same as that of the first core panel 12. In other embodiments of the composite these dimensions could vary.

The second core panel 14 has a substantially straight edge 38 along its length dimension, and parallel and opposite substantially straight edges 40, 42 along its width dimension at opposite sides of the panel length. In the same manner as the first core panel 12, the second core panel 14 has a generally sinusoidal shaped edge 44 opposite its length dimension edge 38.

The second panel sinusoidal edge 44 is also formed with a plurality of alternating wave projections 48 from the second core panel 14 and a plurality of trough slots 50 into the second core panel. As represented in Figure 1, each of the projections 48 from the second core panel 14 is dimensioned where numerous open cells 34 of the second core panel 14 are in each of the projections 48. In variant embodiments of the second core panel 14 the sinusoidal panel edge 44 could be dimensioned so that fewer of the panel open cells 34 are positioned in each projection 48, or more of the panel open cells 34 are positioned in each projection.

The first core panel projections 30 are configured to engaged into the second core panel slots 50 and the second core panel projections 48 are configured to engage into the first core panel slots 32. This engagement of the projections into the slots of the first 12 and second 14 core panels intermeshes the projections and slots of the panels and couples the panels together along the abutting edges without the use of adhesives. The lack of the adhesive provides an acoustically smooth splice between the two core panels 12, 14. The intermeshing of the projections and slots of the two panels bridges sheer loads between the two core panels across the intermeshing joint which enables the removal of adhesive between the joint. The intermeshing of the two panels projections and slots also stabilizes the panels relative to each other during the assembly of the back sheet 18 and front sheet 16 to the composite.

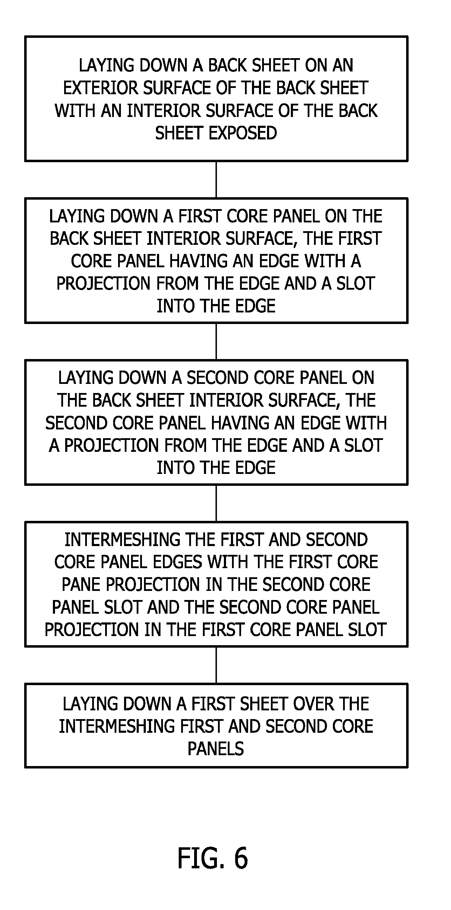

The back sheet 18 is a thin, stiff sheet having opposite interior 52 and exterior 54 surfaces. The back sheet 18 has a peripheral edge 56 having a configuration that is substantially the same as that of the combined first core panel 12 and second core panel 14. In securing the back sheet 18 to the intermeshing first 12 and second 14 core panels, the back sheet is laid on its exterior surface 54 on any support surface, exposing the back sheet interior surface 52. This is represented in Figure 6. A thin layer of adhesive material can then be applied to the back sheet interior surface 52.

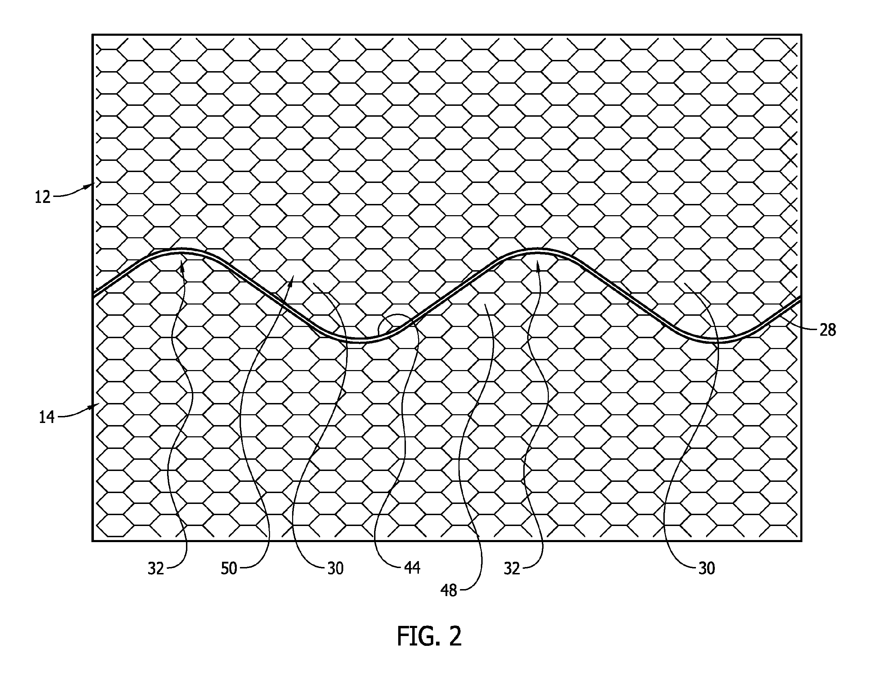

The intermeshing first 12 and second 14 core panels are then positioned on the back sheet interior surface 52 as represented in Figure 2. The edges of the cell walls of the first 12 and second 14 core panels contact the adhesive on the back sheet interior surface 52 and the first 12 and second 14 core panels are thereby adhered to the back sheet interior surface without the need for adhesive (film, foaming, paste, potting compound, etc.) adhering together the two core panels 12, 14 along their intermeshing sinusoidal edges 28, 44.

The front sheet 16 is also a thin, stiff sheet with opposite interior 62 and exterior 64 surfaces. The front sheet 16 also has a peripheral edge 66 that is substantially the same in configuration as the peripheral edge 56 of the back sheet 18. In securing the front sheet 16 to the intermeshing first 12 and second 14 core panels, a thin layer of adhesive is applied to the front sheet interior surface 62. The front sheet interior surface 62 is then positioned on the intermeshing first 12 and second 14 core panels with the peripheral edge 66 of the front sheet substantially coinciding with the peripheral edge 56 of the back sheet 18. The layer of adhesive applied to the front sheet interior surface 62 contacts the edges of the cell walls of the first 12 and second 14 core panels and thereby adheres the front sheet 16 to the intermeshing core panels 12, 14. This completes the construction of the sandwich-structural composite of the disclosure.

The sandwich-structural composite construction uses little or no structural adhesive, either film, foaming, paste, potting compound, etc. The elimination of the adhesive between the intermeshing edges of the two core panels removes the primary cause of acoustic performance degradation in the sandwich-structural composite construction which is the blockage of the open cells between the intermeshing panels by the adhesive. The cost of the adhesive between the intermeshing panels and the cost of the adhesive application is eliminated, thereby reducing the manufacturing costs of the sandwich-structural composite. The removal of the adhesive from the sandwich-structural composite construction, the core panel to core panel intermeshing and stabilization, and the front and back sheet interlocking of the coupled core panels improves manufacturability and reduces defects and rework to correct defects in the composite.

The above-described embodiment of the sandwich-structural composite employed intermeshing core panel edges 28, 44 having a sinusoidal configuration. This is only one example of the configuration of the core panel intermeshing edges that could be employed in the sandwich-structural composite.

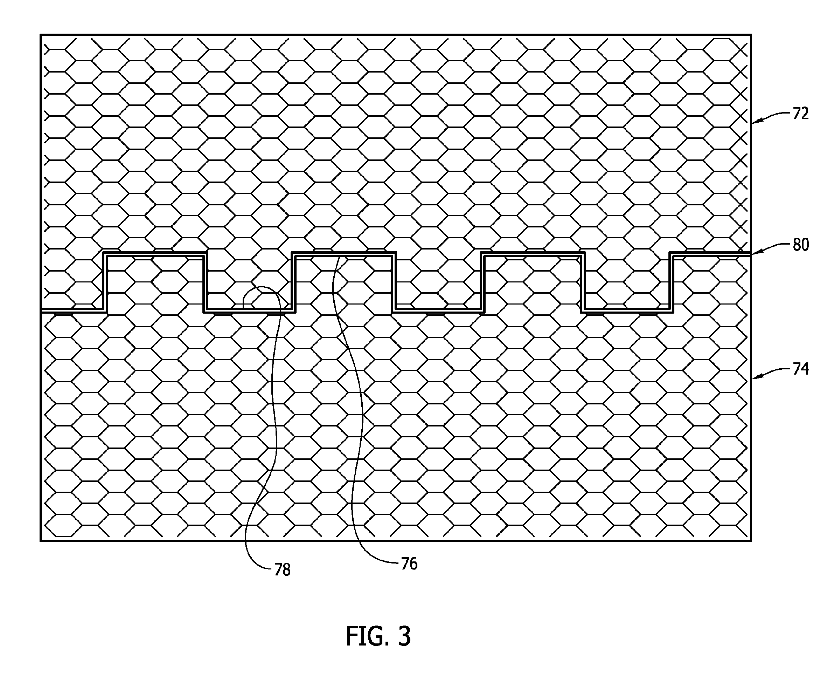

Figure 3 is a representation of a first open cell core panel 72 and a second open cell core panel 74 having respective intermeshing edges 76, 78 that are formed with pluralities of alternating projections having rectangular configurations and slots having rectangular configurations. The intermeshing edges 76, 78 of the first core panel 72 and second core panel 74 form a finger joint configuration 80.

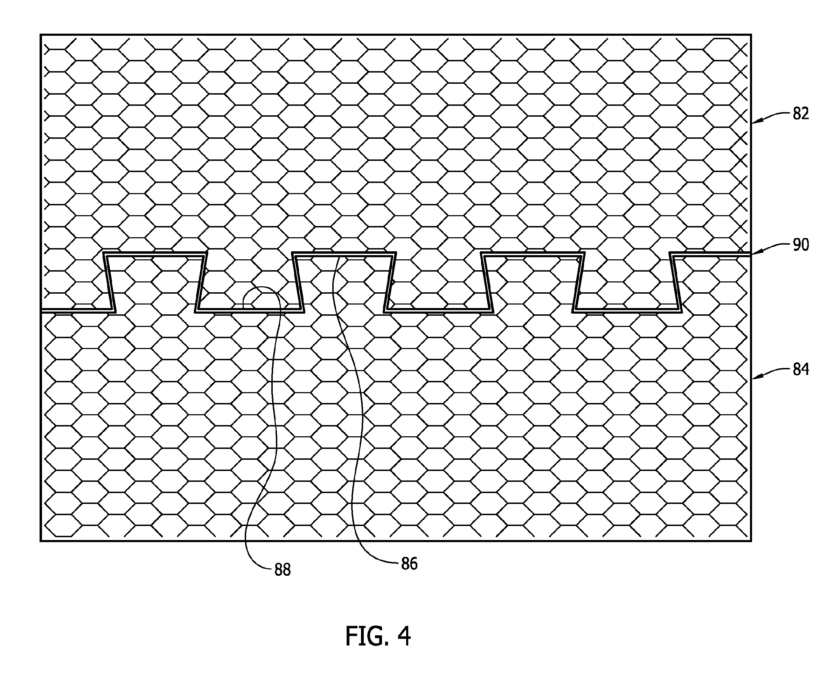

Figure 4 is a representation of a first open cell core panel 82 and a second open cell core panel 84 having respective intermeshing edges 86, 88 that are formed with pluralities of alternating projections having dovetail configurations and slots have dovetail configurations. The intermeshing edges 86, 88 of the respective first 82 and second 84 core panels form a dovetail joint configuration 90 between the two core panels. The dovetail joint configuration 90 not only couples the two core panels 82, 84 together against shear forces, but also couples the two panels 82, 84 together against tension.

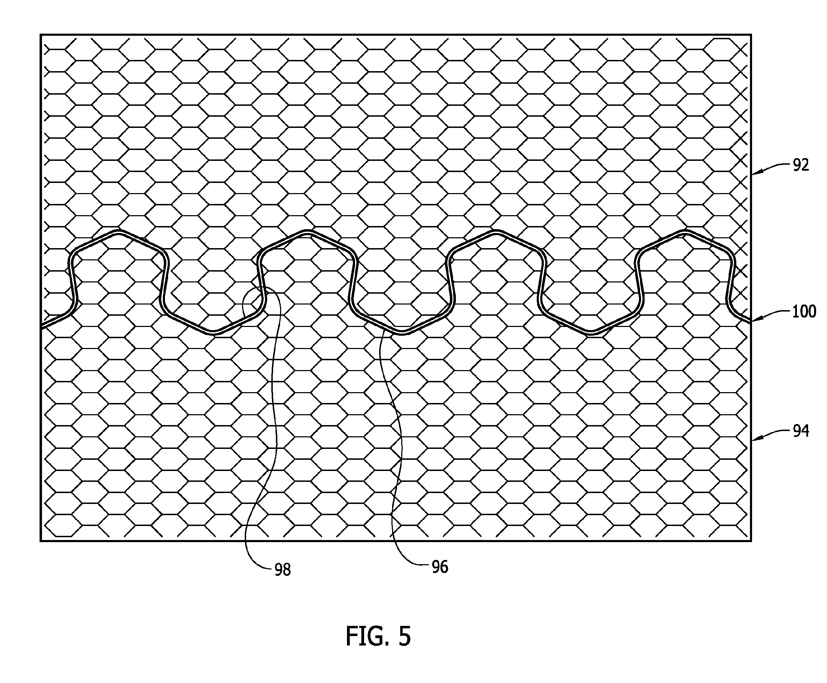

Figure 5 is a representation of a first open cell core panel 92 and a second open cell core panel 94 having respective intermeshing edges 96, 98 that are formed with pluralities of alternating projections and slots having rounded dovetail configurations. The intermeshing edges 96, 98 produce a rounded dovetail joint configuration 100. As with the joint configuration of Figure 4, the rounded dovetail configuration 100 of the Figure 5 embodiment not only secures the two core panels 92, 94 together against shear forces, but also secures the core panels together against tensile forces.

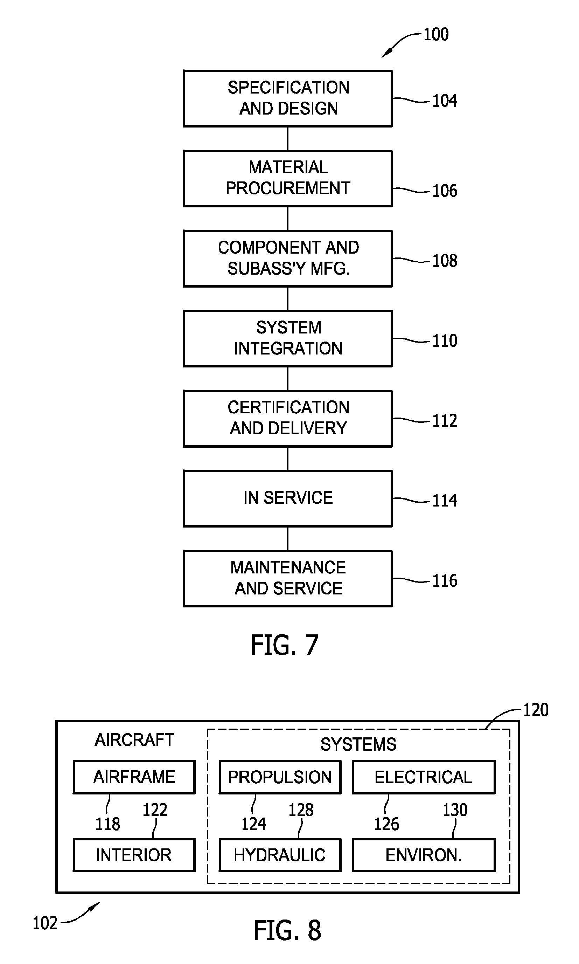

Embodiments of the disclosure may be described in the context of an aircraft manufacturing and service method 100 as shown in FIG. 7 and an aircraft 102 as shown in FIG. 8. During pre-production, exemplary method 100 may include specification and design 104 of the aircraft 102 and material procurement 106. During production, component and subassembly manufacturing 108 and system integration 110 of the aircraft 102 takes place. Thereafter, the aircraft 102 may go through certification and delivery 112 in order to be placed in service 114. While in service by a customer, the aircraft 102 is scheduled for routine maintenance and service 116 (which may also include modification, reconfiguration, refurbishment, and so on).

Each of the processes of method 100 may be performed or carried out by a system integrator, a third party, and/or an operator (e.g., a customer). For the purposes of this description, a system integrator may include without limitation any number of aircraft manufacturers and major-system subcontractors; a third party may include without limitation any number of venders, subcontractors, and suppliers; and an operator may be an airline, leasing company, military entity, service organization, and so on.

As shown in FIG. 8, the aircraft 102 produced by exemplary method 100 may include an airframe 118 with a plurality of systems 120 and an interior 122. Examples of high-level systems 120 include one or more of a propulsion system 124, an electrical system 126, a hydraulic system 126, and an environmental system 130. Any number of other systems may be included. Although an aerospace example is shown, the principles of the invention may be applied to other industries, such as the automotive industry.

Apparatus and methods embodied herein may be employed during any one or more of the stages of the production and service method 100. For example, components or subassemblies corresponding to production process 108 may be fabricated or manufactured in a manner similar to components or subassemblies produced while the aircraft 102 is in service. Also, one or more apparatus embodiments, method embodiments, or a combination thereof may be utilized during the production stages 108 and 110, for example, by substantially expediting assembly of or reducing the cost of an aircraft 102. Similarly, one or more of apparatus embodiments, method embodiments, or a combination thereof may be utilized while the aircraft 102 is in service, for example and without limitation, to maintenance and service 116.

As various modifications could be made in the construction of the apparatus and its method of construction herein described and illustrated without departing from the scope of the invention, it is intended that all matter contained in the foregoing description or shown in the accompanying drawings shall be interpreted as illustrative rather than limiting. Thus, the breadth and scope of the present disclosure should not be limited by any of the above described exemplary embodiments, but should be defined only in accordance with the following claims appended hereto and their equivalents.

## Claims

1. A sandwich-structural composite comprising:
a first core panel having length and width dimensions and a thickness,
the first core panel having a projection from the first core panel;
a second core panel having length and width dimensions and a thickness, the second core panel having a slot into the second core panel;
the first core panel and the second core panel intermeshing with the projection from the first core panel extending into the slot into the second core panel;
a front sheet having opposite exterior and interior surfaces, the front sheet interior surface overlaying the intermeshing first and second core panels; and,
a back sheet having opposite exterior and interior surfaces, the back sheet interior surface overlaying the intermeshing first and second core panels on an opposite side of the first and second core panels from the front sheet.

2. The sandwich-structural composite of claim 1, further comprising:
a layer of adhesive on the front sheet interior surface adhering the front sheet interior surface to the first and second core panels; and,
a layer of adhesive on the back sheet interior surface adhering the back sheet interior surface to the first and second core panels.

3. The sandwich-structural composite of any preceding claim, further comprising:
the projection from the first core panel being one of a plurality of projections from the first core panel; and,
the slot into the second core panel being one of a plurality of slots into the second core panel.

4. The sandwich-structural composite of any preceding claim, further comprising:
the first core panel having at least one edge, the first core panel edge having the projection from the first core panel and the first core panel edge having a slot into the first core panel; and,
the second core panel having at least one edge, the second core panel edge having the slot into the second core panel and the second core panel edge having a projection from the second core panel;
the first core panel edge and the second core panel edge intermeshing with the projection from the first core panel extending into the slot into the second core panel and the projection from the second core panel extending into the slot into the first core panel.

5. The sandwich-structural composite of claim 4, further comprising:
the projection from the first core panel being one of a plurality of projections from the first core panel and the slot into the first core panel being one of a plurality of slots into the first core panel; and,
the projection from the second core panel being one of a plurality of projections from the second core panel and the slot into the second core panel being one of a plurality of slots into the second core panel.

6. The sandwich-structural composite of claim 4, further comprising:
the first core panel being an open cell core panel with several of open cells passing through the first core panel projection; and,
the second core panel being an open cell core panel.

7. The sandwich-structural composite of claim 6, further comprising:
the projection from the first core panel being one of a plurality of projections from the first core panel and the slot into the first core panel being one of a plurality of slots into the first core panel; and,
the projection from the second core panel being one of a plurality of projections from the second core panel and the slot into the second core panel being one of a plurality of slots into the second core panel.

8. The sandwich-structural composite of any preceding claim, further comprising:
the projection from the first core panel having a rectangular configuration and the slot into the first core panel having a rectangular configuration;
the projection from the second core panel having a rectangular configuration and the slot into the second core panel having a rectangular configuration; and,
the first core panel and the second core panel intermeshing with a finger joint configuration.

9. The sandwich-structural composite of any preceding claim, further comprising:
the projection from the first core panel having a wave configuration and the slot into the first core panel having a trough configuration;
the projection from the second core panel having a wave configuration and the slot into the second core panel having a trough configuration; and,
the first core panel and the second core panel intermeshing with a sinusoidal joint configuration.

10. The sandwich-structural composite of any preceding claim, further comprising:
the projection from the first core panel having a dovetail configuration and the slot into the first core panel having a dovetail configuration;
the projection from the second core panel having a dovetail configuration and the slot into the second core panel having a dovetail configuration; and,
the first core panel and the second core panel intermeshing with a dovetail joint configuration.

11. A method of making a sandwich-structural composite comprising:
laying down a back sheet having opposite exterior and interior surfaces with the interior surface exposed;
laying down a first open cell core panel on the back sheet interior surface, the first core panel having an edge, the first core panel edge having a projection from the first core panel and the first core panel edge having a slot into the first core panel;
laying down a second open cell core panel on the back sheet interior surface, the second core panel having an edge, the second core panel edge having a projection from the second core panel and the second core panel edge having a slot into the second core panel;
intermeshing the first core panel edge and the second core panel edge with the projection from the first core panel extending into the slot into the second core panel and the projection from the second core panel extending into the slot into the first core panel; and,
laying down a front sheet having opposite exterior and interior surfaces with the interior surface of the front sheet overlaying the intermeshing first and second core panels on an opposite side of the intermeshing first and second core panels from the back sheet.

12. The method of claim 11, further comprising:
intermeshing the first core panel edge and the second core panel edge with there being no adhesive substance between the intermeshing first core panel edge and the second core panel edge.

13. The method of claims 11 and 12, further comprising:
applying a layer of adhesive to the back sheet interior surface prior to laying down the first core panel and the second core panel on the back sheet interior surface; and,
applying a layer of adhesive to the front sheet interior surface prior to laying down the front sheet interior surface over the first core panel and the second core panel.

14. The method of claims 11-13, further comprising:
the projection from the first core panel being one of a plurality of projections from the first core panel and the slot into the first core panel being one of a plurality of slots into the first core panel;
the projection from the second core panel being one of a plurality of projections from the second core panel and the slot into the second core panel being one of a plurality of slots into the second core panel; and,
the first core panel edge and the second core panel edge intermeshing with the plurality of projections from the first core panel extending into the plurality of slots into the second core panel and the plurality of projections from the second core panel extending into the plurality of slots into the first core panel.
